# EUROPÄISCHE PATENTANMELDUNG

(11) **EP 0 828 091 A1**
(43) Veröffentlichungstag der Anmeldung: **11.03.1998**
(21) Anmeldenummer: 96810585.8
(22) Anmeldetag: 05.09.1996
(51) Int. Cl.: F16G 3/00

(54) **Verbindungseinrichtung für einen Riemen eines Türantriebes**

(71) Anmelder: INVENTIO AG, CH-6052 Hergiswil NW (CH)
(72) Erfinder: Gräbner, Bodo, Dipl.-Ing., 12349 Berlin (DE)

(57) **Zusammenfassung**

Bei dieser Verbindungseinrichtung werden zwei Riemenenden (26, 28) eines Zahnriemens mittels Haltern (H1, H2) und einem Verbindungselement (1) verbunden, wobei das Verbindungselement (1) die Riemenbewegung auf Türflügel überträgt. Ein Halter (H1, H2) besteht aus einem Riemenelement (20, 21) und einem Klemmelement (8, 9). Ein Riemenende wird zwischen Riemenelement und Klemmelement festgehalten. Das eine Klemmelement ist mittels einer Schraube mit dem Verbindungselement (1) verbunden. Das andere Klemmelement ist mittels einer Spannschraube (30) mit dem Verbindungselement (1) verbunden, an der die Riemenspannung des Zahnriemens einstellbar ist.

## Beschreibung

Die Erfindung betrifft eine Verbindungseinrichtung für einen Riemen eines Türantriebes bestehend aus Elementen zum Verbinden der Riemenenden und aus Elementen zum Übertragen der Riemenbewegung auf Türflügel.

Aus der Patentschrift US 5 213 182 ist eine Einrichtung zum Verbinden von Zahnriemenenden bekannt geworden. Der Zahnriemen ist Teil einer Türantriebseinrichtung für eine Aufzugstür. Ein Gehäuse weist eine Nut in der Breite des Zahnriemens auf. Die Riemenenden werden mit der flachen Seite in die Nut eingelegt. Eine Deckplatte in Nutgrösse ist auf einer Seite als Negativ des Zahnriemens ausgebildet. Die Zähne der Deckplatte passen zwischen die Zähne des Zahnriemens. Die Deckplatte wird mittels einer Klemmplatte auf die Riemenende gepresst, wobei die Riemenenden auf der flachen Seite in der Nut liegen und auf der Zahnseite mit der Deckplatte verzahnen. Gehäuse und Klemmplatte werden mittels Schrauben verbunden, an denen an der Gehäuserückseite ein Verbindungswinkel mit Langschlitz mittels Muttern befestigt ist. Der Verbindungswinkel steht in Verbindung mit einem zu öffnenden und zu schliessenden Türflügel.

Ein Nachteil der bekannten Einrichtung liegt darin, dass zum Nachspannen des Zahnriemens die Verbindungseinrichtung geöffnet werden muss und die Zahnriemenenden um mindestens einen Zahn vorgeschoben werden müssen. Im Extremfall müssen die Zahnriemenenden gekürzt werden. Weiter nachteilig ist, dass der Zahnriemen nicht weniger als eine Zahnbreite gespannt werden kann, was einen überspannten oder einen losen Zahnriemen zur Folge hat.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Verbindungseinrichtung zu schaffen, mit der Riemenenden eines eine Tür antreibenden Riemens verbindbar sind und mit der der Riemen kontinuierlich spannbar ist.

Die durch die Erfindung erreichten Vorteile sind im wesentlichen darin zu sehen, dass für den Riemen Meterware verwendet werden kann, ohne dass aufwendige Spannvorrichtungen notwendig sind. Weiter vorteilhaft ist, dass die Funktionen Verbindung der Riemenenden und Spannen des Riemens in einem Element zusammengefasst sind. Damit können die Arbeitsgänge Verbinden und Spannen gleichzeitig und an gleicher Stelle des Türantriebes ausgeführt werden. Eine aufwendige Spanneinrichtung an anderer Stelle entfällt. Weiter vorteilhaft ist, dass dank der einfachen Verbindungseinrichtung der Riemen bei der Baustellenmontage aufgelegt werden kann und die Arbeitsgänge Verbinden und Spannen gleichzeitig und an der gleichen Stelle des Türantriebs ausführbar sind. Zudem ist die Verbindungseinrichtung auch bei Unterhaltsarbeiten von der Etagenseite aus leicht zugänglich, weil die Verbindungseinrichtung mittels Türflügel verschiebbar ist.

Im folgenden wird die Erfindung anhand von mehrere Ausführungswege darstellenden Zeichnungen näher erläutert. Es zeigen:
- Fig. 1: eine Frontansicht einer erfindungsgemässen Verbindungseinrichtung zum Verbinden und Spannen eines Zahnriemens,
- Fig. 2: eine Draufsicht der erfindungsgemässen Verbindungseinrichtung gemäss Fig. 1,
- Fig. 3 und Fig. 4: ein Verbindungselement der erfindungsgemässen Verbindungseinrichtung,
- Fig. 5 und Fig. 6: ein Klemmelement der erfindungsgemässen Verbindungseinrichtung,
- Fig. 7 und Fig. 8: eine Riemenplatte der erfindungsgemässen Verbindungseinrichtung und
- Fig. 9 und Fig. 10: eine Ausführungsvariante des Klemmelementes und der Riemenplatte.

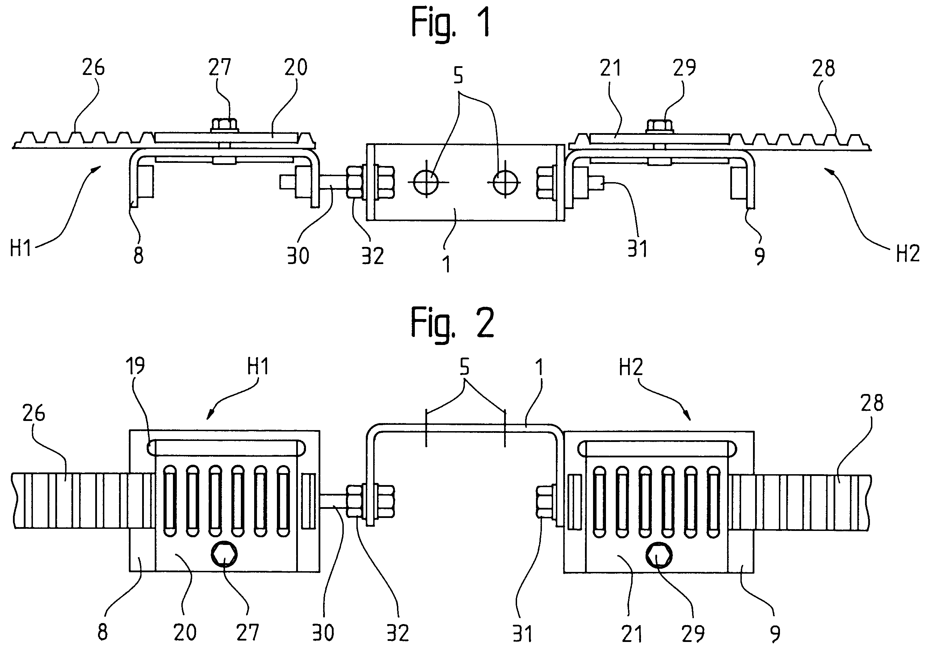

In den Fig. 1 bis 10 ist mit 1 ein U-förmiges Verbindungselement bezeichnet, das einen Plattenteil 2, einen ersten Schenkel 3 und einen zweiten Schenkel 4 aufweist. Am Plattenteil 2 sind Bohrungen 5 angeordnet, die der Verbindung mit dem anzutreibenden Türflügel dienen. Die Schenkel 3, 4 weisen je eine Bohrung 6, 7 auf.

Zum Festhalten der Zahnriemenenden sind Halter H1, H2 vorgesehen, die aus je einem Klemmelement und einem Riemenelement bestehen, wobei je ein Klemmelement mit dem Verbindungselement 1 verbunden ist.

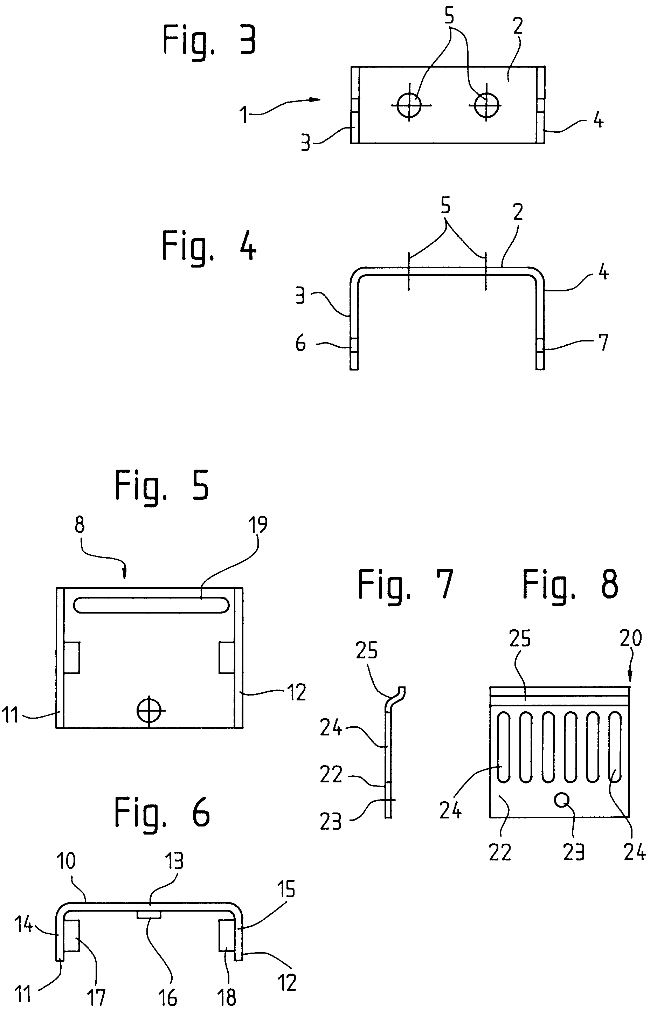

Ein U-förmiges erstes Klemmelement ist mit 8 und ein gleiches zweites U-förmiges Klemmelement ist mit 9 bezeichnet. Fig. 5 und 6 zeigen das erste Klemmelement 8 bestehend aus einem Riementeil 10, einem dritten Schenkel 11 und aus einem vierten Schenkel 12. Am Riementeil 10 und an jedem Schenkel 11, 12 sind Bohrungen 13, 14, 15 und Muttern 16, 17, 18 angeordnet. Auf der einen Breitseite weist der Riementeil 10 einen Langschlitz 19 auf. Das Klemmelement 8, 9 kann auch L-förmig sein, wobei der kurze Schenkel mit dem Verbindungselement 1 in Verbindung steht.

Eine erstes Riemenelement ist mit 20 und ein gleiches zweites Riemenelement ist mit 21 bezeichnet. Fig. 7 und 8 zeigen das erste Riemenelement 20 bestehend aus einer Riemenplatte 22 mit einer Bohrung 23, einer Reihe von Schlitzen 24 und einer schwanenhalsförmigen Seite 25.

Bei der Montage wird ein erstes Riemenende 26 auf den ersten Riementeil 10 des ersten Klemmelementes 8 aufgelegt und mittels der Riemenplatte 22 festgeklemmt, wobei die schwanenhalsförmige Seite 25 der Riemenplatte 22 in den Langschlitz 19 des Riementeils 10 eingeführt wird und die Riemenplatte 22 mit einer Drehbewegung auf das erste Riemenende 26 gelegt wird, wobei die Zähne des Zahnriemens in die Schlitze 24 der Riemenplatte 22 zu liegen kommen. Eine Schraube 27 wird in die Bohrung 23 des ersten Riemenelementes 20 eingeführt und mit der Mutter 16 des Riementeils 10 verschraubt, wodurch das erste Riemenelement 20 einerseits mittels Schraubverbindung und andererseits mittels dem aus Langschlitz 19 des Riementeils 10 und schwanenhalsförmiger Seite 25 der Riemenplatte 22 gebildeten Gelenk in Verbindung mit dem ersten Klemmelement 8 steht. Das erste Riemenende 26 wird an den Riemenzähnen in den Schlitzen 24 gehalten und auf den Riementeil 10 gepresst.

Ein Zweites Riemenende 28 wird vergleichbar mit dem ersten Riemenende 26 zwischen dem zweiten Riemenelement 21 und dem zweiten Klemmelement 9 eingespannt, wobei Riemenelement 21 und Klemmelement 9 mittels einer Schraube 29 verbunden werden.

Wie in Fig. 1 und 2 dargestellt, wird das Verbindungselement 1 einerseits mittels mindestens einer Spannschraube 30 und andererseits mittels einer Schraube 31 mit dem ersten Klemmelement 8 bzw. mit dem zweiten Klemmelement 9 verbunden. Zum Spannen des Riemens wird die Spannschraube 30 nachgezogen und mittels einer Gegenmutter 32 gesichert.

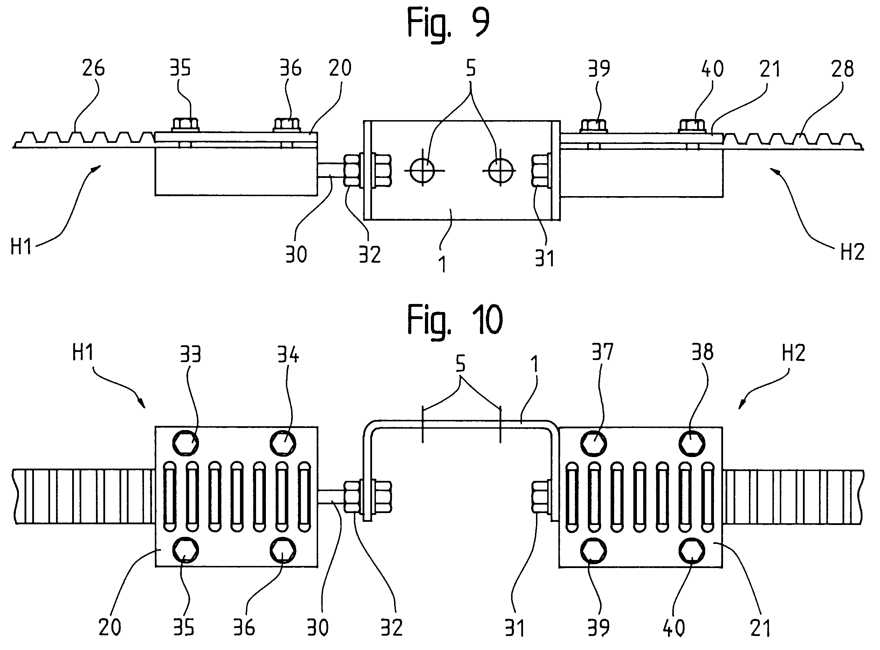

Fig. 9 und 10 zeigen eine weitere Ausführungsvariante des ersten Riemenelementes 20 bzw. des zweiten Riemenelementes 21. Anstelle der schwanenhalsförmigen Seite 25 und der Bohrung 23 ist an je einer Ecke eine Bohrung vorgesehen. Dementsprechend sind an der Unterseite des ersten Klemmelementes 8 bzw. des zweiten Klemmelementes 9 an je einer Ecke Muttern angeordnet. Das erste Riemenelement 20 bzw. zweite Riemenelement 21 wird mittels Schrauben 33, 34, 35, 36 bzw. 37, 38, 39, 40 mit dem ersten Klemmelement 8 bzw. zweiten Klemmelement 9 verbunden, wobei das erste Riemenende 26 bzw. zweite Riemenende 28 festgeklemmt wird.

## Patentansprüche

1. Verbindungseinrichtung für einen Riemen eines Türantriebes bestehend aus Elementen zum Verbinden der Riemenenden und aus Elementen zum Übertragen der Riemenbewegung auf Türflügel,
dadurch gekennzeichnet,
dass je Riemenende (26, 28) ein Halter (H1, H2) angeordnet ist und
dass die Halter (H1, H2) mittels eines Verbindungselementes (1) verbunden sind.

2. Verbindungseinrichtung nach Anspruch 1,
dadurch gekennzeichnet,
dass das Verbindungselement (1) mit dem Halter (H1, H2) mittels mindestens einer Spannschraube (30) verbunden ist, mit der der Riemen spannbar ist.

3. Verbindungseinrichtung nach Anspruch 2,
dadurch gekennzeichnet,
dass das Verbindungselement (1) U-förmig ist und einen Plattenteil (2), einen ersten Schenkel (3) und einen zweiten Schenkel (4) aufweist, wobei der Plattenteil (2) mit dem Türflügel und die Schenkel (3, 4) mit den Haltern (H1, H2) in Verbindung stehen.

4. Verbindungseinrichtung nach den Ansprüchen 1 bis 3,
dadurch gekennzeichnet,
dass der Halter (H1, H2) ein Klemmelement (8, 9) und ein Riemenelement (20, 21) aufweist, die mittels mindestens einer Schraube (27) verbindbar sind, wobei das Riemenende (26, 28) zwischen Klemmelement (8, 9) und Riemenelement (20, 21) gehalten wird.

5. Verbindungseinrichtung nach Anspruch 4,
dadurch gekennzeichnet,
dass das Klemmelement (8, 9) U-förmig ist und einen Riementeil (10) mit einem Langschlitz (19), einen dritten Schenkel (11) und einen vierten Schenkel (12) aufweist, wobei das Riemenende (26, 28) auf dem Riementeil (10) aufliegt und die Schenkel (11, 12) mittels Schrauben (30, 31) in Verbindung mit den Schenkeln (3, 4) des Verbindungselementes (1) stehen.

6. Verbindungseinrichtung nach Anspruch 4,
dadurch gekennzeichnet,
dass das Riemenelement (20, 21) eine Riemenplatte (22) mit einer schwanenhalsförmigen Seite (25) und mit Schlitzen (24) aufweist, wobei die schwanenhalsförmige Seite (25) in den Langschlitz (19) des Riementeils (10) einführbar ist und die Schlitze (24) auf die Zähne der Riemenenden (26, 28) passen.
